# EUROPEAN PATENT SPECIFICATION

(11) **EP 3 128 255 B1**
(45) Date of publication and mention of the grant of the patent: **19.06.2019**
(21) Application number: 15774204.0
(22) Date of filing: 16.03.2015
(51) Int. Cl.: F24S 40/80, F24S 25/60, F24S 80/70, F24S 23/74, F24S 70/20, F24S 10/40

(54) **METHOD OF MANUFACTURING A SOLAR HEAT COLLECTING DEVICE**
VERFAHREN ZUR HERSTELLUNG EINER SONNENWÄRMESAMMLUNGSVORRICHTUNG
MÉTHODE DE FABRICATION D'UN DISPOSITIF DE COLLECTE DE CHALEUR SOLAIRE

(30) Priority: 31.03.2014 JP 2014072301
(43) Date of publication of application: 08.02.2017
(73) Proprietor: Kabushiki Kaisha Toyota Jidoshokki, Kariya-shi, Aichi 448-8671 (JP)
(72) Inventor: MATSUDO, Akihisa, Kariya-shi Aichi 448-8671 (JP)
(74) Representative: TBK
(86) International application number: PCT/JP2015/057698
(87) International publication number: WO 2015/151774

(56) References cited:
- WO-A1-2014/002643
- GB-A- 2 005 823
- JP-A- S5 977 252
- JP-A- S57 129 352
- JP-A- 2001 219 281
- JP-A- 2009 269 047
- JP-A- 2011 206 408
- JP-U- S57 128 053
- JP-U- S57 128 053
- US-A- 4 183 351
- US-A1- 2008 087 277
- US-A1- 2010 126 499
- US-A1- 2012 211 003
- US-B1- 6 705 311

## Description

### Technical Field

This invention relates to a method of manufacturing a solar heat collection apparatus, and more particularly to a trough type solar heat collection apparatus.

### Background Art

In a known trough type solar heat collection apparatus, as disclosed in document US 6705311 B1, sunlight is collected in a heat collecting tube using heat collecting means having a parabolic surface, and as a result, a heating medium flowing through the heat collecting tube is heated. The heat collecting tube used in this solar heat collection apparatus has a duplex tube structure formed of a glass outer tube and a metal inner tube so that sunlight is efficiently converted into heat, enabling a reduction in heat loss. Further, an enclosed space set in a vacuum condition is provided between the outer tube and the inner tube.

To set the enclosed space between the outer tube and the inner tube in a vacuum condition, an exhaust hole is provided in the outer tube, and after air has been discharged through the exhaust hole, the glass tube is heated and sealed. However, a sealing mark remains in the form of a projecting bump in the location where the exhaust hole was sealed. When a projecting bump remains on the surface of the glass outer tube in this manner, the projecting part of the sealing mark may be struck while installing the solar heat collection apparatus or handling the heat collecting tube during maintenance, and as a result, the outer tube may be damaged. Furthermore, when the heat collecting tube is packed into a box made of a hard material, such as a wooden box, the projecting bump part may strike a wall of the box or an adjacent heat collecting tube such that the outer tube is damaged. Therefore, when the heat collecting tube is packed into a box or the like, packing must be performed while taking into consideration orientations and positions of individual heat collecting tubes, making the packing operation laborious.

Here, document JP S59-77252 A describes attaching an exhaust tip tube to a metal support tube that is provided between the inner tube and the outer tube in order to support the inner tube relative to the outer tube, discharging air by connecting a vacuum pump to the exhaust tip tube, and then sealing the exhaust tip tube.

Document GB 2 005 823 A describes a heat collecting tube with an end cap having a small hole utilized during the manufacturing process for de-pressurizing, said small hole being then closed by a spot of solder.

According to document US 2012/211003 A1, in an absorber tube an opening is covered by a membrane in order to enable hydrogen permeate therethrough.

However, the exhaust tip tube that is attached to the support tube provided between the inner tube and the outer tube is sealed at an end portion of the heat collecting tube while projecting in an identical direction to an extension direction of the heat collecting tube. Here, as shown in Fig. 3B of PTL 1, a plurality of heat collecting tubes are connected in succession at respective end portions thereof so as to extend in a lengthwise direction. Therefore, if the exhaust tip tube projects when the end portions of respective heat collecting tubes are connected to each other, a space for the exhaust tip tube must be secured in the lengthwise direction, leading to a corresponding reduction in an effective length by which the end portions can be connected to each other, and as a result, the heat collecting tubes cannot be connected easily.

This invention has been designed to solve the problems described above, and the object thereof is to provide a method of manufacturing a solar heat collection apparatus with which damage to an outer tube can be prevented and heat collecting tubes can be easily connected to each other in a lengthwise direction.

The object of the invention is achieved by a method according to claim 1. Advantageous embodiments are carried out according to the dependent claim.

A solar heat collection apparatus heats a heating medium flowing through a heat collecting tube by collecting sunlight in the heat collecting tube using light collecting means, wherein the heat collecting tube includes an inner tube through which the heating medium flows, an outer tube provided on an outer side of the inner tube, and a connecting member connecting the inner tube to the outer tube, an insulating space is formed between the inner tube and the outer tube, an exhaust hole that communicates with the insulating space is formed in the connecting member, and the exhaust hole is sealed by a sealing member welded to the connecting member.

Further, the connecting member of the solar heat collection apparatus may include a flange connected to the inner tube and a stress relaxing member provided between the flange and the outer tube, and the exhaust hole may be formed in the flange.

Furthermore, the sealing member is welded to the connecting member by friction welding.

With the solar heat collection apparatus according to this invention, damage to the outer tube can be prevented, and heat collecting tubes can be easily connected to each other in the lengthwise direction.

### Brief Description of the Drawings

Fig. 1 is a sectional view taken in a direction perpendicular to a lengthwise direction of a heat collecting tube provided in a solar heat collection apparatus.
Fig. 2 is a sectional view taken in a direction parallel to the lengthwise direction of the heat collecting tube used in the solar heat collection apparatus shown in Fig. 1.
Fig. 3 is an enlarged sectional view showing the vicinity of a connecting member formed with an exhaust hole in the heat collecting tube used in the solar heat collection apparatus shown in Fig. 1.
Fig. 4A is a view showing a process for bringing a sealing member into contact with the exhaust hole, which is performed during a process for sealing the exhaust hole with the sealing member in the solar heat collection apparatus shown in Fig. 1.
Fig. 4B is a view showing a process for pushing the sealing member into the exhaust hole using a rotating rod, which is performed during the process for sealing the exhaust hole with the sealing member in the solar heat collection apparatus shown in Fig. 1.
Fig. 4C is a view showing a state in which the exhaust hole is sealed by the sealing member following the processes shown in Figs. 4A and 4B in the solar heat collection apparatus shown in Fig. 1.
Fig. 5 is an enlarged sectional view showing the vicinity of a connecting member formed with an exhaust hole in a heat collecting tube used in a solar heat collection apparatus.
Fig. 6A is a view showing a modified example of the shape of the sealing member used in the solar heat collection apparatus.
Fig. 6B is a view showing a modified example of the shape of the sealing member used in the solar heat collection apparatus.
Fig. 6C is a view showing a modified example of the shape of the sealing member used in the solar heat collection apparatus.
Fig. 6D is a view showing a modified example of the shape of the sealing member used in the solar heat collection apparatus.
Fig. 7A is a view showing a modified example of the shape of a flange provided in the vicinity of the exhaust hole in the solar heat collection apparatus.
Fig. 7B is a view showing a modified example of the shape of the flange provided in the vicinity of the exhaust hole in the solar heat collection apparatus.

Examples will be described below on the basis of the attached drawings.

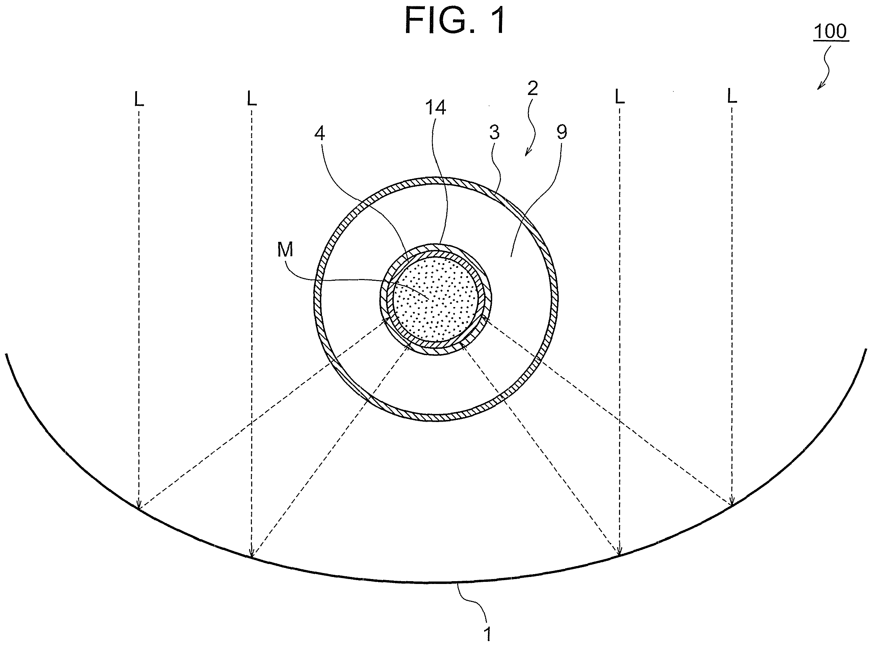

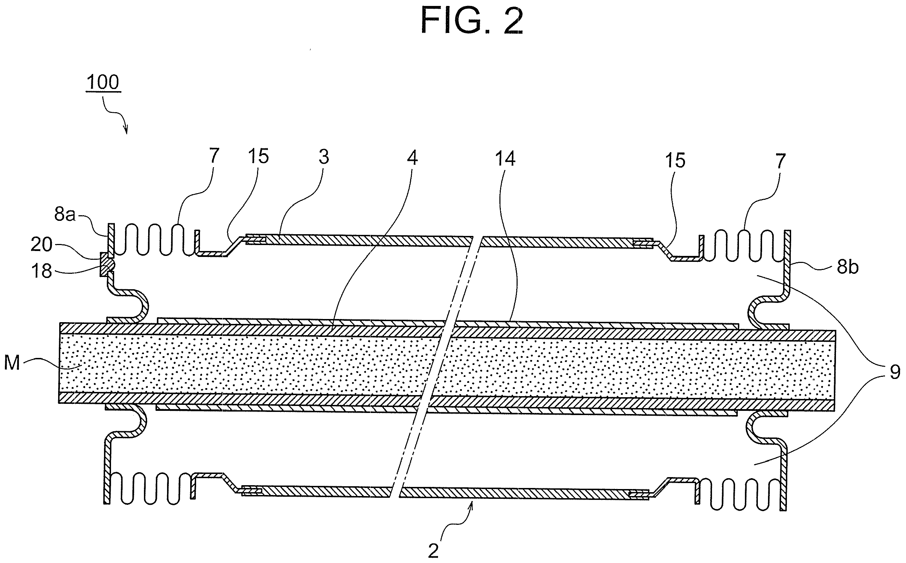

As shown in Figs. 1 and 2, a solar heat collection apparatus 100 includes a curved surface mirror 1 serving as light collecting means, and a heat collecting tube 2 disposed on an inner side of the curved surface mirror 1. The curved surface mirror 1 is formed to have a parabolic surface-shaped cross-section that extends in a lengthwise direction.

Further, an inner surface of the curved surface mirror 1 is formed as a mirror surface, and the heat collecting tube 2 is supported in a focal position of the mirror surface so as to extend in the lengthwise direction. As a result, sunlight L incident on the curved surface mirror 1 is reflected by the inner surface of the curved surface mirror 1 so as to enter the heat collecting tube 2.

The heat collecting tube 2 has a duplex tube structure formed of a metal inner tube 4 through which a heating medium M flows, and a glass outer tube 3 provided on an outer side of the inner tube 4. An insulating space 9 maintained in a vacuum condition is formed between the inner tube 4 and the outer tube 3. The length of the inner tube 4 and the outer tube 3 in the lengthwise direction is approximately 4 m. An optical selective film 14 is formed on an outer surface of the inner tube 4. The optical selective film 14 is capable of absorbing visible light rays and near infrared rays from the sunlight L, and reflecting far ultraviolet rays emitted from the heating medium M.

Note that glass such as borosilicate glass is used for the outer tube 3.

Further, there are no particular limitations on the material of the inner tube 4, but typically, a heat resistant metal such as an iron-based material (for example, stainless steel, heat resistant steel, steel alloy, or carbon steel) or an aluminum-based material may be used.

Furthermore, the optical selective film 14 is formed from a laminated body having a metal layer, a cermet layer, and a dielectric layer, for example.

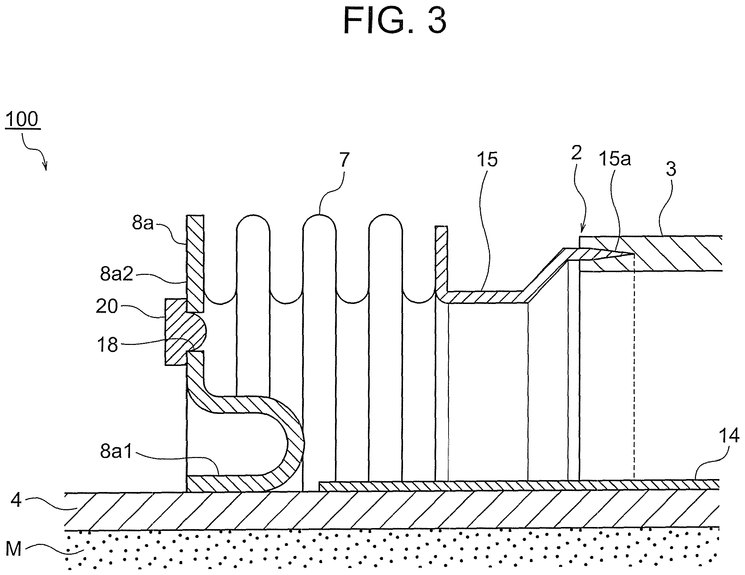

Flanges 8a, 8b forming a pair of substantially disc-shaped members, each having an opening in a central part thereof, are attached to respective ends of the inner tube 4, and the flanges 8a, 8b are disposed so as to sandwich the outer tube 3 from either side on an outer periphery of the inner tube 4. Note that the flanges are members that are attached perpendicularly to the outer periphery of the inner tube 4. Inner sides of the flanges 8a, 8b, or in other words parts thereof close to the inner tube 4, are shaped as substantially annular recesses recessed toward the interior of the insulating space 9. Of the substantially annular recessed part formed on the inner side of the flange 8a, a substantially cylindrical part by which the flange 8a is attached fixedly to the inner tube 4 serves as an attachment portion 8a1. Note that the optical selective film 14 is disposed only in the insulating space 9, and therefore the attachment portion 8a1 is attached directly to the inner tube 4. Further, a substantially annular flat part on an outer side of the flange 8a serves as a flat portion 8a2. An end portion of the attachment portion 8a1 is positioned so as to be flush with the flat portion 8a2 of the flange 8a in the lengthwise direction. Furthermore, an exhaust hole 18 that communicates with the insulating space 9 is formed in the flat portion 8a2 of the flange 8a, and the exhaust hole 18 is sealed by a metal sealing member 20. Moreover, one end of a substantially cylindrical bellows 7 that includes a bellows-shaped part is connected to the flat portion 8a2 of each flange 8a, 8b. One end of a substantially cylindrical cylinder member 15 is connected to the other end of each of the pair of bellows 7. Other ends of the pair of cylinder members 15 are connected to the respective ends of the outer tube 3. Here, as shown in Fig. 3, an end portion 15a of the cylinder member 15 on the side connected to the outer tube 3 is formed as a sharp edge, and the end portion 15a formed as a sharp edge is fixed by being inserted into the outer tube 3. Thus, the flanges 8a, 8b, the bellows 7, and the cylinder member 15 connect the inner tube 4 to the outer tube 3.

Here, the flanges 8a, 8b, the bellows 7, and the cylinder members 15 together constitute a connecting member.

Further, the bellows 7 provided between the flanges 8a, 8b and the outer tube 3 constitute stress relaxing members. When the inner tube 4 undergoes thermal expansion so as to expand in the lengthwise direction, the bellows 7 also expands in the lengthwise direction, thereby absorbing a difference between respective coefficients of thermal expansion of the outer tube 3 and the inner tube 4.

A heat resistant metal such as an iron-based material (for example, stainless steel, heat resistant steel, steel alloy, or carbon steel) or an aluminum-based material, for example, may be used as the material of the flanges 8a, 8b and the bellows 7.

Further, Kovar metal, which has a linear expansion coefficient similar to the glass of the outer tube 3, is used for the cylinder members 15.

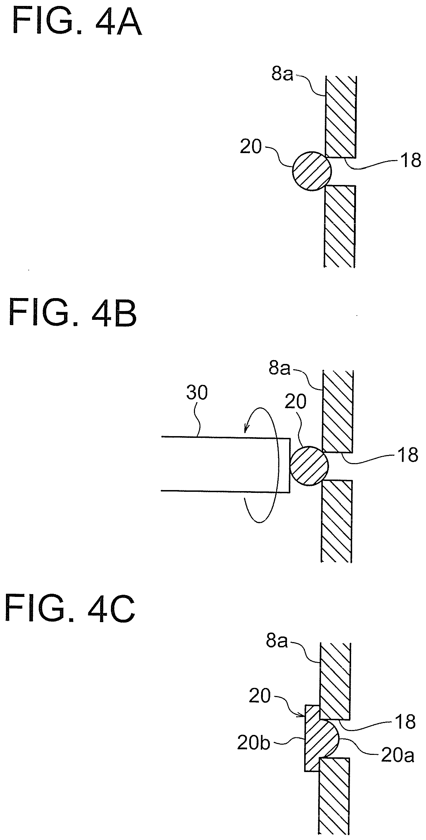

Fig. 4 shows a process for sealing the exhaust hole 18.

First, air in the insulating space 9 is evacuated through the exhaust hole 18 using a vacuum pump (not shown) so that the interior of the insulating space 9 is set in a vacuum condition. Next, as shown in Fig. 4A, a metal ball having a larger diameter than the exhaust hole 18 is brought into contact with the exhaust hole 18 as the sealing member 20 and temporarily fixed thereto. Next, as shown in Fig. 4B, the sealing member 20 is pushed toward the insulating space 9 side by a rotating rod 30. The sealing member 20 generates heat due to friction generated between the sealing member 20 and the rod 30, and as a result, the sealing member 20 melts so as to deform. Accordingly as shown in Fig. 4C, a portion 20a of the sealing member 20 on the insulating space 9 side is pushed into the exhaust hole 18, while a remaining portion 20b is pressed flat so as to spread over the flange 8a and welded at a predetermined thickness. In other words, the exhaust hole 18 is sealed by the sealing member 20, which is welded to the flange 8a by friction welding.

In the solar heat collection apparatus 100, as described above, the exhaust hole 18 is formed in the flange 8a and sealed by the sealing member 20 instead of an exhaust hole being formed in the outer tube 3, and therefore the risk of the glass outer tube 3 being damaged when a sealing mark of the exhaust hole is struck by another object can be eliminated. Further, the exhaust hole 18 is sealed by welding the sealing member 20 directly to the flange 8a on the periphery of the exhaust hole 18, and therefore the sealing trace of the exhaust hole 18 does not project in the lengthwise direction. Hence, a sufficient effective length can be secured in the lengthwise direction to connect end portions of a plurality of the heat collecting tubes 2 to each other, and as a result, the heat collecting tubes 2 can be easily connected to each other.

Furthermore, the exhaust hole 18 is sealed by friction-welding the sealing member 20 to the flange 8a. Here, a current may be passed through the sealing member 20 so that the exhaust hole 18 is sealed by resistance welding. In this case, however, the electrical resistance of the sealing member 20 may be uneven, and it may therefore be impossible to ensure that the portion 20b of the sealing member 20 deforms in a uniform manner. When the exhaust hole 18 is sealed by friction welding, on the other hand, the sealing member 20 merely needs to be pushed by the rotating rod 30, and therefore the portion 20b of the sealing member 20 can be deformed in a uniform manner, with the result that the exhaust hole 18 can be sealed more reliably.

The exhaust hole 18 may also be sealed by performing electron beam welding on the sealing member 20. In this case, however, sputtering may occur in the sealing member 20. When the sealing member 20 is welded to the flange 8a by friction welding, on the other hand, sputtering does not occur, and therefore the likelihood of defects being formed in the sealed part of the exhaust hole 18 can be reduced.

Note that the formation position of the exhaust hole 18 is not limited to the flange 8a, and the exhaust hole 18 may be formed in the cylinder member 15 instead.

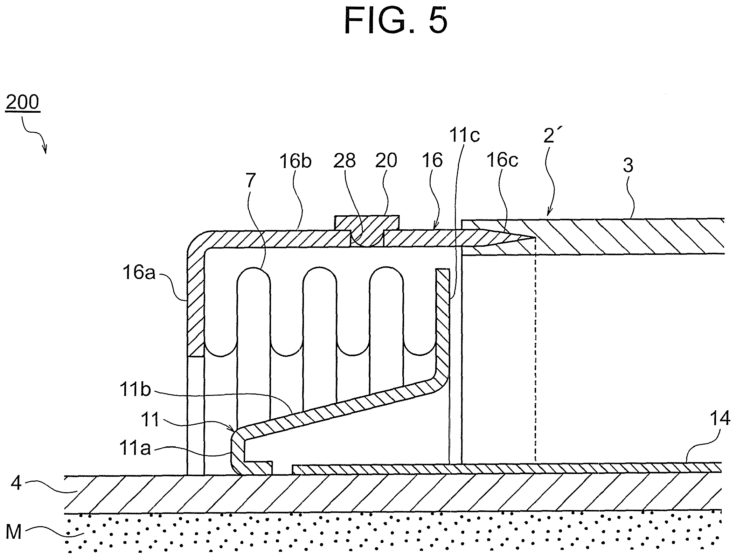

Fig. 5 shows a configuration of a heat collecting tube 2' of a solar heat collection apparatus 200. Note that numerals identical to the reference numerals used in Figs. 1 to 3 denote identical or similar constituent components, and detailed description of these constituent components has been omitted.

A substantially conical first coupling member 11 is attached to an outer periphery of one end portion of the outer tube 3. The first coupling member 11 is constituted by a substantially cylindrical attachment portion 11a having a substantially L-shaped cross section, a conical portion 11b having a partially cut-away cone shape, and a substantially ring-shaped annular portion 11c. The conical portion 11b increases in diameter from an end portion of the heat collecting tube 2' toward the center thereof. A small diameter end of the conical portion 11b is connected integrally to the attachment portion 11a, and a large diameter end of the conical portion 11b is connected integrally to an inside edge portion of the annular portion 11c. Further, one side of the substantially L-shaped cross-section of the attachment portion 11a of the first coupling member 11 extends toward the center side of the heat collecting tube 2', and is fixed to the outer surface of the inner tube 4. In other words, the first coupling member 11 is attached to the outer surface of the inner tube 4 by the attachment portion 11a. Furthermore, one end of the bellows 7 is connected to the annular portion 11c, and a substantially cylindrical second coupling member 16 is connected to the other end of the bellows 7. The second coupling member 16 is constituted by an annular portion 16a to which one end of the bellows 7 is connected, and a substantially cylindrical cylinder portion 16b connected to an outside edge portion of the annular portion 16a. The annular portion 16a is perpendicular to the inner tube 4, and the attachment portion 11a of the first coupling member 11 is positioned further toward the center side of the heat collecting tube 2' than the annular portion 16a of the second coupling member 16 in the lengthwise direction. Further, an end portion of the cylinder portion 16b of the second coupling member 16 on a side that does not contact the annular portion 16a, or in other words an end portion 16c on the side that is connected to the outer tube 3, is formed as a sharp edge, and the sharp edge is fixed by being inserted into the outer tube 3. Thus, the outer tube 3 and the inner tube 4 are connected to each other via the bellows 7, the first coupling member 11, and the second coupling member 16. Moreover, an exhaust hole 28 is formed in the cylinder portion 16b of the second coupling member 16. The exhaust hole 28 is sealed by the sealing member 20, which is welded to the cylinder portion 16b by friction welding.

Here, the bellows 7, the first coupling member 11, and the second coupling member 16 together constitute the connecting member. The bellows 7 serving as the stress relaxing member contracts when the inner tube 4 undergoes thermal expansion so as to expand in the lengthwise direction, thereby absorbing the difference between the respective coefficients of thermal expansion of the outer tube 3 and the inner tube 4.

A heat resistant metal such as an iron-based material (for example, stainless steel, heat resistant steel, steel alloy, or carbon steel) or an aluminum-based material, for example, may be used as the material of the first coupling member 11. Further, Kovar metal, which has a linear expansion coefficient similar to the glass of the outer tube 3, is used for the second coupling member 16.

Note that a connecting member having a similar configuration is provided on the opposite side end portion of the heat collecting tube 2', but an exhaust hole is not formed therein.

As described above, with the heat collecting tube 2' of the solar heat collection apparatus 200, similarly to the solar heat collection apparatus 100, the exhaust hole 28 is formed in the second coupling member 16 serving as the connecting member, and therefore the risk of damage to the outer tube 3 is reduced. Further, the exhaust hole 28 is formed in the cylinder portion 16b of the second coupling member 16, which is positioned on a side face of the heat collecting tube 2, and therefore no sealing trace of the exhaust hole remains on the lengthwise direction side of the heat collecting tube 2'. Hence, a plurality of the heat collecting tubes 2' can be easily connected to each other in the lengthwise direction. Furthermore, the exhaust hole 28 is sealed by welding the sealing member 20 to the second coupling member 16 by friction welding, and therefore the exhaust hole 28 can be sealed more reliably than with resistance welding or electron beam welding.

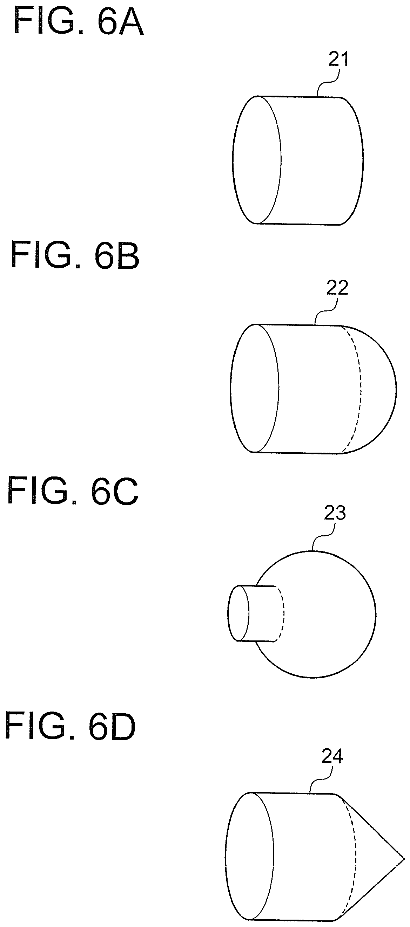

Moreover, in the method according to this invention, the shape of the sealing member is not limited to the ball-shaped sealing member 20 shown in Fig. 4A. More specifically, a columnar sealing member 21 such as that shown in Fig. 6A may be used instead. Alternatively, a sealing member 22 having a shape combining a column and a ball, such as that shown in Fig. 6B, may be employed. Further, a sealing member 23 having a shape combining a small diameter column with a ball, such as that shown in Fig. 6C, may be employed. Furthermore, a sealing member 24 having a shape combining a column and a cone, such as that shown in Fig. 6D, may be employed.

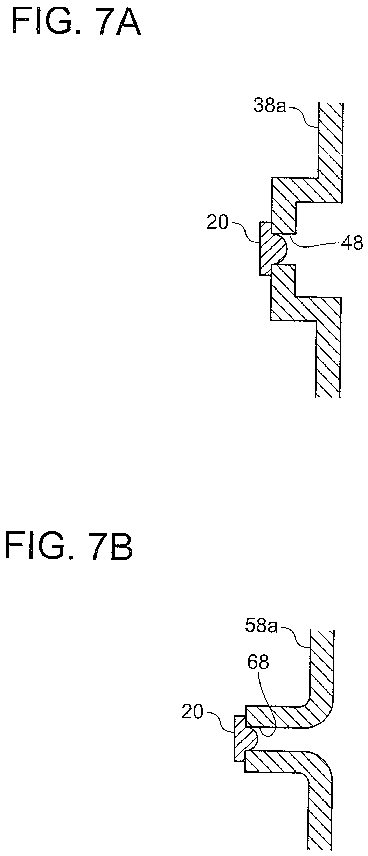

Moreover, in the method according to this invention, the shape of the connecting member in which the exhaust hole 18 or 28 is formed is not limited to the shapes shown in Figs. 3 and 5. More specifically, as shown in Fig. 7A, a flange 38a formed with an exhaust hole 48 may include a substantially columnar projecting portion, and the exhaust hole 48 may be formed in the center of the projecting portion. Alternatively, as shown in Fig. 7B, a flange 58a having a projecting shape only in a location where an exhaust hole 68 is formed may be used.

### Reference Signs

- 1: Curved surface mirror (light collecting means)
- 2, 2': Heat collecting tube
- 3: Outer tube
- 4: Inner tube
- 7: Bellows (stress relaxing member, connecting member)
- 8a, 8b, 38a, 58a: Flange (connecting member)
- 9: Insulating space
- 11: First coupling member (connecting member)
- 15: Cylinder member (connecting member)
- 16: Second coupling member (connecting member)
- 18, 28, 48, 68: Exhaust hole
- 20, 21, 22, 23, 24: Sealing member
- 100, 200: Solar heat collection apparatus
- L: Sunlight
- M: Heating medium

## Claims

1. A method of manufacturing a solar heat collection apparatus, wherein the heat collecting tube (2; 2') comprises:
an inner tube (4) through which the heating medium (M) heated by sunlight flows;
and an outer tube (3) provided on an outer side of the inner tube (4); and
a connecting member (7, 8a, 8b, 15; 11, 16; 38a; 58a) connecting the inner tube (4) to the outer tube (3) and an insulating space (9) is formed between the inner tube (4) and the outer tube (3),
the method comprising a step of evacuating air in the insulating space (9) through an exhaust hole (18) using a vacuum pump so that the interior of the insulating space is set in a vacuum condition;
a step of bringing a metal ball having a larger diameter than the exhaust hole (18) as a sealing member (20) in contact with the exhaust hole (18; 28; 48; 68) that is formed in the connecting member and communicates with the insulating space (9), and temporarily fix the metal ball thereto;
and a step of pushing the sealing member (20) by a rotating rod (30) and friction-welding the sealing member (20) to the connecting member,
in which the sealing member (20) melts so as to deform by friction heat generated by the rotating rod (30) so that a portion (20a) of the sealing member (20) is pushed to the exhaust hole (18; 28; 48; 68) to seal the exhaust hole (18; 28; 48; 68), and the remaining part (20b) of the sealing member (20) is welded to the connecting member.

2. A method of manufacturing a solar heat collection apparatus according to claim 1, wherein the connecting member includes a flange (8a, 8b; 38a; 58a) connected to the inner tube (4) and a stress relaxing member (7) provided between the flange (8a, 8b; 38a; 58a) and the outer tube (3), with the exhaust hole (18; 48; 68) being formed in the flange (8a; 38a; 58a).

## Patentansprüche

1. Verfahren zum Herstellen einer Solarwärmesammelvorrichtung, wobei das Wärmesammelrohr (2; 2') umfasst:
ein inneres Rohr (4), durch das das durch Sonnenlicht erwärmtes Wärmemedium (M) fließt;
und ein äußeres Rohr (3), das an einer Außenseite des inneren Rohrs (4) bereitgestellt ist; und
ein Verbindungselement (7, 8a, 8b, 15; 11, 16; 38a; 58a), das das innere Rohr (4) mit dem äußeren Rohr (3) verbindet, und ein isolierender Raum (9) zwischen dem inneren Rohr (4) und dem äußeren Rohr (3) ausgebildet ist,
wobei das Verfahren einen Schritt umfasst, Luft in dem isolierendem Raum (9) durch eine Auslassbohrung (18) unter Verwendung einer Unterdruckpumpe zu evakuieren, sodass das Innere des isolierenden Raums in einen Unterdruckzustand versetzt ist;
einen Schritt, eine Metallkugel, die einen größeren Durchmesser als die Auslassbohrung (18) aufweist, als ein Dichtelement (20) in Berührung mit der Auslassbohrung (18; 28; 48; 68) zu bringen, die in dem Verbindungselement ausgebildet ist und mit dem isolierenden Raum (9) in Verbindung ist, und die Metallkugel vorübergehend daran zu befestigen;
und einen Schritt, das Dichtelement (20) durch eine drehende Stange (30) zu schieben und das Dichtelement (20) mit dem Verbindungselement mittels Reibung zu verschweißen,
in dem das Dichtelement (20) schmilzt, um durch die durch die drehende Stange (30) erzeugte Reibungswärme so zu verformen, dass ein Abschnitt (20a) des Dichtelements (20) zu der Auslassbohrung (18; 28; 48; 68) geschoben wird, um die Auslassbohrung (18; 28; 48; 68) abzudichten, und das verbleibende Teil (20b) des Dichtelements (20) mit dem Verbindungselement verschweißt wird.

2. Verfahren zum Herstellen einer Solarwärmesammelvorrichtung nach Anspruch 1, wobei das Verbindungselement einen Flansch (8a, 8b; 38a; 58a) hat, der mit dem inneren Rohr (4) verbunden ist, und ein Spannungsentlastungselement (7), das zwischen dem Flansch (8a, 8b; 38a; 58a) und dem äußeren Rohr (3) bereitgestellt ist, wobei die Auslassbohrung (18; 48; 68) in dem Flansch (8a; 38a; 58a) ausgebildet ist.

## Revendications

1. Procédé pour fabriquer un appareil de collecte de chaleur solaire, dans lequel le tube de collecte de chaleur (2 ; 2') comprend :
un tube interne (4) à travers lequel le milieu chauffant (M) chauffé par les rayons du soleil s'écoule ;
et un tube externe (3) prévu sur un côté externe du tube interne (4) ; et
un élément de raccordement (7, 8a, 8b, 15 ; 11, 16 ; 38a ; 58a) raccordant le tube interne (4) au tube externe (3) et un espace d'isolation (9) est formé entre le tube interne (4) et le tube externe (3),
le procédé comprenant une étape pour évacuer l'air dans l'espace isolant (9) à travers un trou d'échappement (18) à l'aide d'une pompe à vide de sorte que l'intérieur de l'espace isolant est réglé dans une condition de vide ;
une étape pour amener une bille métallique ayant un diamètre supérieur au trou d'échappement (18) en tant qu'élément d'étanchéité (20), en contact avec le trou d'échappement (18 ; 28 ; 48 ; 68) qui est formé dans l'élément de raccordement et communique avec l'espace isolant (9), et fixe temporairement la bille métallique à ce dernier ;
et une étape pour pousser l'élément d'étanchéité (20) par une tige rotative (30) et le soudage par friction de l'élément d'étanchéité (20) sur l'élément de raccordement,
dans lequel l'élément d'étanchéité (20) fond afin de se déformer par la chaleur de frottement générée par la tige rotative (30), de sorte qu'une partie (20a) de l'élément d'étanchéité (20) est poussée vers le trou d'échappement (18 ; 28 ; 48 ; 68) pour sceller le trou d'échappement (18 ; 28 ; 48 ; 68) et la partie résiduelle (20b) de l'élément d'étanchéité (20) est soudée sur l'élément de raccordement.

2. Procédé pour fabriquer un appareil de collecte de chaleur solaire selon la revendication 1, dans lequel l'élément de raccordement comprend une bride (8a, 8b ; 38a ; 58a) raccordée au tube interne (4) et un élément de relâchement de contrainte (7) prévu entre la bride (8a, 8b ; 38a ; 58a) et le tube externe (3), avec le trou d'échappement (18 ; 48 ; 68) qui est formé dans la bride (8a ; 38a ; 58a).
